Europäisches Patentamt

European Patent Office

Office européen des brevets

(11) Numéro de publication: **0 291 979 B1**

# FASCICULE DE BREVET EUROPEEN

(45) Date de publication de fascicule du brevet: **19.08.92**  (51) Int. Cl.5: **H04L 27/22**

(21) Numéro de dépôt: **88108043.6**

(22) Date de dépôt: **19.05.88**

(54) **Procédé de démodulation de signaux modulés numériquement et dispositif de mise en oeuvre d'un tel procédé.**

(30) Priorité: **21.05.87 FR 8707129**

(43) Date de publication de la demande:
**23.11.88 Bulletin 88/47**

(45) Mention de la délivrance du brevet:
**19.08.92 Bulletin 92/34**

(84) Etats contractants désignés:
**DE FR GB IT**

(56) Documents cités:
**FR-A- 2 572 603**

**IEEE TRANSACTIONS ON COMMUNICA-TIONS, vol. COM-28, no. 8, août 1980, pages 1190-1196, IEEE, New York, US; C.R. CAHN et al.: "Digital phase sampling for microcomputer implementation of carrier acquisition and coherent tracking"**

(73) Titulaire: **ALCATEL ESPACE**
**11, avenue Dubonnet**
**F-92407 Courbevoie Cédex(FR)**

(72) Inventeur: **Fontanes, Sylvain**
**34, avenue Guy de Maupassant**
**F-78400 Chatou(FR)**
Inventeur: **Birot, Patrice**
**42 Terrasse de l'Iris La Defense 2**
**F-92400 Courbevoie(FR)**
Inventeur: **Marguinaud, André**
**20, rue Léon Bertault**
**F-91120 Palaiseau(FR)**
Inventeur: **Ouignon, Thierry**
**7, rue de l'Ouest**
**F-92000 Nanterre(FR)**
Inventeur: **Romann, Brigitte**
**21, Allée de la Belle Feuille**
**F-92100 Boulogne Billancourt(FR)**

(74) Mandataire: **Weinmiller, Jürgen et al**
**Lennéstrasse 9 Postfach 24**
**W-8133 Feldafing(DE)**

EP 0 291 979 B1

**Description**

La présente invention concerne un procédé numérique de démodulation de signaux modulés numériquement par des données ou de la parole numérisée. Elle permet de restituer, après échantillonnage et numérisation des signaux, sans aucun organe analogique, les signaux modulants, la porteuse et la rythme.

Une nombreuse littérature a été publiée dans le domaine de la démodulation des signaux et de nombreux produits étudiés et commercialisés existent sur le marché à des débits allant de quelques dizaine de bit/s (signaux télégraphiques) à quelques centaines de Mbit/s (liaison numérique sur câble transportant des multiplex numériques de voies téléphoniques jusqu'à 140, voire 560 Mbit/s - liaison AMRT (accès multiple par répartition dans le temps) par satellites à 120 Mbit/s : Système Intelsat et Eutelsat).

Ces différents produits exploitent tous des circuits adaptés à chacune des fonctions à réaliser (restitution de la porteuse -restitution du rythme - circuit de décision après filtrage post-détection...) Ces modes de réalisation sous forme analogique ou transposés des concepts analogiques classiques utilisent tous le principe du traitement en temps réel qui consiste à ne mémoriser que les résultats du traitement. Seule, la démodulation différentielle assure une mise en mémoire du signal origine mais n'opère sur celui-ci qu'un retard fixe.

Ce principe de traitement a des conséquences néfastes pour les performances et la complexité.
- Sur les performances ; car selon ce principe on ne s'adapte pas au mieux à la variabilité des paramètres, et de ce fait on est plus sensible aux signaux perturbateurs (bruit, raie parasite) superposés aux signaux à mesurer ;
- sur la complexité ; car en utilisant ce principe, il est très difficile de s'adapter au mieux à chacune des étapes que l'on doit mettre en oeuvre pour aboutir au but recherché. En particulier les étapes d'acquisition et de poursuite nécessitent soit des dispositifs différents, soit des caractéristiques de circuit analogiques adaptées à chacune des étapes et il est très difficile, sans compliquer les dispositifs mis en oeuvre, d'exploiter et d'adapter au mieux le dispositif de mesure à chacune des étapes.

Concernant la démodulation, l'acquisition des caractéristiques de phase porteuse et rythme demande beaucoup plus de calculs que leur poursuite et la démodulation du signal. Une solution traditionnelle ne permet pas d'optimiser l'organe de traitement aux différentes situations.

Les procédés traditionnels de démodulation utilisent tant pour la restitution de porteuse que pour la restitution de rythme, différents procédés d'asservissement de phase (boucle "phase lock" après élévation au carré - boucle de Costa ...) la numérisation n'intervenant que dans le cadre de réalisations technologiques particulières, ou d'approximations linéaires réclamant beaucoup de calculs.

Un document de l'art connu FR-A- 2 572 603 décrit un démodulateur différentiel de signaux électriques à plusieurs états d'amplitude et de phase pour équipements de transmission de données, qui comprend des moyens d'échantillonnage, des moyens de calcul des phases instantanées et des amplitudes instantanées des signaux, des moyens de calcul du saut de phase instantanée des signaux, des moyens de filtrage statistique, des moyens de filtrage temporels, des moyens de calcul de la probabilité de présence d'un saut de phase et de probabilité de présence d'un écart d'amplitude, ainsi que des moyens de décision pour déterminer, en fonction des résultats fournis par les moyens de calcul des probabilités, les sauts de phase et d'amplitude les plus probables.

Le procédé de l'invention utilise largement les mémoires numériques adressables et le logiciel, ce qui élimine toutes les difficultés mentionnées ci-dessus et permet de disposer d'un algorithme global et d'approcher les performances optimales (filtre adapté) avec le minimum de calcul.

L'invention a donc pour objet un procédé numérique de démodulation de signaux modulés numériquement par variation de phase comprenant une phase d'acquisition des signaux échantillonnés et numérisés ainsi qu'une phase de calcul des échantillons de phase; caractérisé en ce qu'il comprend successivement :
- la phase d'acquisition des signaux échantillonnés et numérisés,
- la phase de calcul et de stockage des échantillons de phase,
- une phase d'élaboration d'hypothèses de phase d'horloge,
- une phase de calcul de la phase porteuse et de la phase rythme sur n symboles,
- une phase de démodulation proprement dite par comparaison entre la phase du signal durant le symbole considéré et la phase de la porteuse;

et en ce que dans cette phase de calcul de la phase porteuse et de la phase rythme sur n symboles, en partant des hypothèses de phases rythme symbole par des opérations modulo $\pm X$, ces opérations pour tout angle $\Phi$ compris entre $-\infty$ et $+\infty$ étant données par un angle $\phi$ compris entre $- X$ et $+ X$ tel que si $\Phi$ est compris entre $(2n - 1) X$ et $(2n + 1) X$ on a $X/(\Phi - \phi) = 1/2n$ ; n étant entier, et en utilisant le barycentre cylindrique, qui est tel que pour $\ell$ phases $\Phi 1$, $\Phi 2...\Phi l$ définies sur l'intervalle $- X \leqq \Phi i < + X$ après un calcul

2

séparé des centres de gravités des phases positives $\Phi^+$ et des phases négatives $\phi^-$, en ramenant l'origine en $\Phi^-$ et en utilisant les pondérations respectives $\ell^+$ et $\ell^-$ on a ledit barycentre $\Phi = [(\ell^+/\ell)\,\Phi_0 + \Phi^-]$ modulo $\pm X$ avec $\Phi_0 = (\Phi^+ - \Phi^-)$ modulo $\pm X$, on supprime la modulation afin d'évaluer la phase porteuse durant chacun des symboles, pour effectuer une estimation de la phase porteuse sur S symboles, S étant choisi en fonction de l'incertitude sur le rythme et sur la porteuse; la connaissance de la phase rythme et partant de la phase porteuse étant obtenue en maximisant un paramètre H qui est fonction de la phase ainsi obtenue et des valeurs caractéristique des transitions de phase entre symboles.

L'invention a également pour objet un dispositif de mise en oeuvre de ce procédé qui comprend un organe de traitement numérique, recevant en entrée le signal à analyser après traversée d'un numériseur auquel est relié un pilote stable. Plus particulièrement cet organe de traitement comprend :
- un circuit de mémoire commune;
- un circuit d'élaboration des échantillons de phase;
- un circuit d'élaboration des hypothèses de phase rythme;
- un circuit de calcul de la phase porteuse (par exemple 5 symboles);
- un circuit de choix de l'hypothèse phase rythme ;
- un circuit de calcul de la phase du signal (par exemple un symbole) ;
- un circuit de démodulation ;
- un circuit de gestion d'interface avec le démodulateur ;
- un circuit interface des signaux démodulés ;
  tous ces circuits étant reliés à un bus d'interconnection par des liaisons bidirectionnelles, les deux derniers circuits étant reliés entre eux par une liaison bidirectionnelle ;
- un circuit d'acquisition des échantillons numérisés, en entrée, relié au circuit de mémoire commune par une liaison mono-directionnelle ;
  le circuit interface des signaux démodulés ayant deux sorties :
- une sortie signaux démodulés,
- une sortie qualité signaux,
qui forment les sorties dudit organe de traitement.

Avantageusement les différentes tâches de calcul nécessaires à la démodulation peuvent être implantée sur des organes de calcul pilotés par logiciel, chaque organe étant indépendant des autres organes et pouvant s'adresser à des mémoires pour y lire l'un quelconque des résultats des autres organes aussi bien que les échantillons de signaux inscrits à l'origine ainsi que ses propres résultats de calcul ou pour y inscrire dans une zone qui est affectée à lui seul ses propres résultats de calcul, ces mémoires étant soit communes soit constituées de réseaux maillés.

L'invention peut s'appliquer notamment à un signal modulé de type "PSK" à un ou plusieurs niveaux, modulé de manière cohérente ou différentielle, à un signal dérivé tel que offset QPSK ou tout procédé de modulation permettant l'obtention d'un signal à amplitude constante (MSK - modulation cohérente de phase), à un signal modulé de type "PSK" avec des sauts d'amplitude, l'amplitude étant traitée par des procédés connus, à un signal modulé "FSK", le test d'hypothèses effectué tenant compte de plusieurs fréquences de modulation.

Les caractéristiques et avantages de l'invention ressortiront d'ailleurs de la description qui va suivre, à titre d'exemple non limitatif, en référence aux figures annexées sur lesquelles :
- les figures 1A et 1B représentent un organigramme illustrant le procédé de l'invention,
- les figures 2, 3 et 4 montrent des représentations schématiques illustrant le procédé de l'invention,

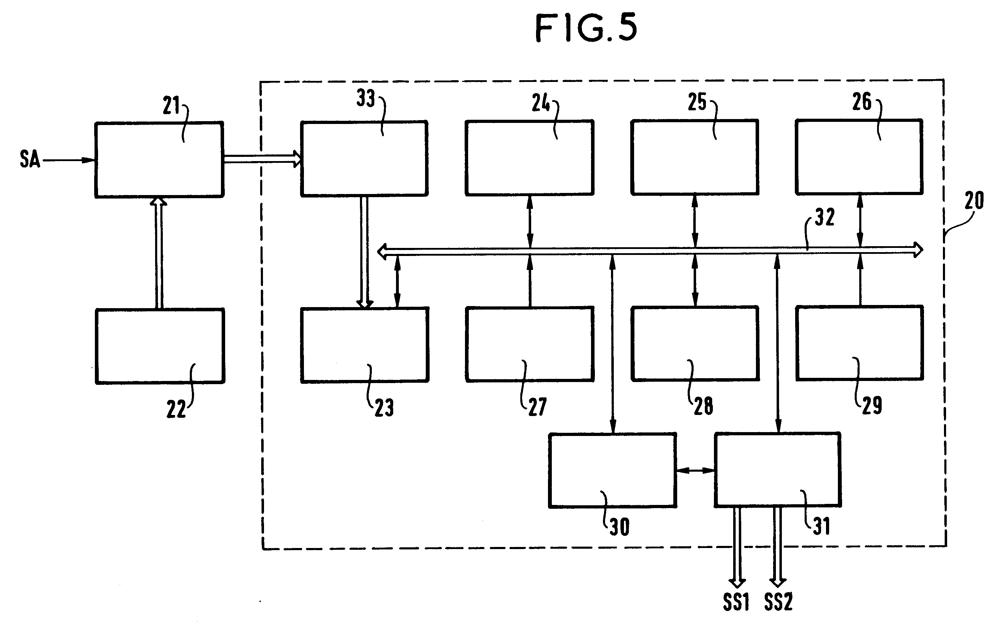

- la figure 5 illustre un dispositif mettant en oeuvre le procédé de l'invention.

L'invention est relative à la démodulation de signaux reçus d'un satellite géostationnaire dans des conditions de Eb/No (énergie par bit/bruit par Hertz) critiques et de rythme d'horloge et de porteuse mal connus.

Le procédé proposé permet d'approcher les performances d'un filtre adapté par l'utilisation d'estimateurs linéaires travaillant sur la phase du signal reçu.

Le procédé peut être appliqué aux types de modulation utilisés :
- sur les satellites de télécommunications, que les organes de démodulation soient situés au sol ou embarqués sur la charge utile; modulation "BPSK" (Binary Phase Shift Keying) ou "QPSK" (Quaternary Phase Shift Keying) en "ARMT" (Accès Multiple à Répartition dans le Temps) ou "AMRF" (Accès Multiple à Répartition en Fréquence) avec un ou plusieurs canaux par porteuse;
- sur les réseaux terrestres, qu'il s'agisse de câbles ou de fibres optiques (signaux en bande de base) ou de faisceaux hertziens ou encore de signaux modulés dans une bande téléphonique ;
- sur les réseaux de distribution, chez l'abonné, pour des usagers à valeur ajoutée (en frontal d'une base de donnée, d'un calculateur ou d'un centre de messagerie) ou dans un centre P.T.T ;

- sur tout système utilisant des signaux modulés (télécommande-télémesure - signalisation téléphonique-mesure de distance...).

D'autres retombées peuvent aussi être développées, en particulier, en ce qui concerne l'élimination de signaux connus d'un signal à démoduler (annulation d'écho), le désembrouillage de signaux de données modulés.

Le procédé de l'invention est basé sur une algorithmie globale de démodulation élaborée à partir d'un test d'hypothèses sur la phase du rythme symbole du signal modulé.

Afin de bien comprendre la succession des opérations effectuées, on se base sur un signal reçu pour lequel le rythme symbole a une valeur connue mais présente une incertitude que l'on limitera à 1%, la phase de ce rythme n'étant pas connue. Par ailleurs, le signal reçu est modulé par saut de phase de telle sorte que durant une période du rythme symbole, le signal est constitué d'une porteuse sinusoïdale de fréquence connue et dont la phase reste constante.

Le problème à résoudre revient donc à retrouver la phase du rythme (c'est-à-dire déterminer les instants de début et de fin de symbole) retrouver la phase de la porteuse en supprimant la modulation dont les caractéristiques sont supposées connues, puis en déduire la phase du signal durant chacune des périodes du rythme, celle-ci étant significative d'un symbole particulier afin de restituer la valeur de ce dernier.

Le procédé de l'invention comprend successivement :
- une phase d'acquisition des signaux échantillonnés et numérisés,
- une phase de calcul et de stockage des échantillons de phase ; la démodulation est basée sur l'acquisition des signaux échantillonnés et numérisés. A partir des échantillons ainsi stockés, on construit le signal analytique associé et la phase développée dudit signal. On dispose ainsi d'une représentation du signal reçu par des échantillons de phase auxquels on peut associer la valeur de l'amplitude.
- une phase d'élaboration d'hypothèses de phase d'horloge ; travaillant à partir des échantillons stockés, on élabore différentes hypothèses de phases rythme symbole.
- une phase de calcul de la phase porteuse et de la phase rythme sur n symboles ; partant de chacune des hypothèses précédentes, par des opérations modulo ±X et en utilisant le "barycentre cylindrique", qui sera décrit ultérieurement, on supprime la modulation afin d'évaluer la phase porteuse durant chacun des symboles, pour effectuer une estimation de la phase porteuse sur S symboles, S étant choisi en fonction de l'incertitude sur le rythme et sur la porteuse. La connaissance de la phase rythme et partant de la phase porteuse est obtenue en maximisant un paramètre H qui est fonction de la phase ainsi obtenue et des valeurs caractéristiques des transitions de phase entre symboles ;
- une phase de démodulation proprement dite par comparaison entre la phase du signal durant le symbole considéré et la phase de la porteuse ; la comparaison entre la phase du signal durant le symbole considéré, et la phase $\phi$ de la porteuse permet en effet de démoduler le signal (traitement du signe de $D_K$) pour chacun des symboles.

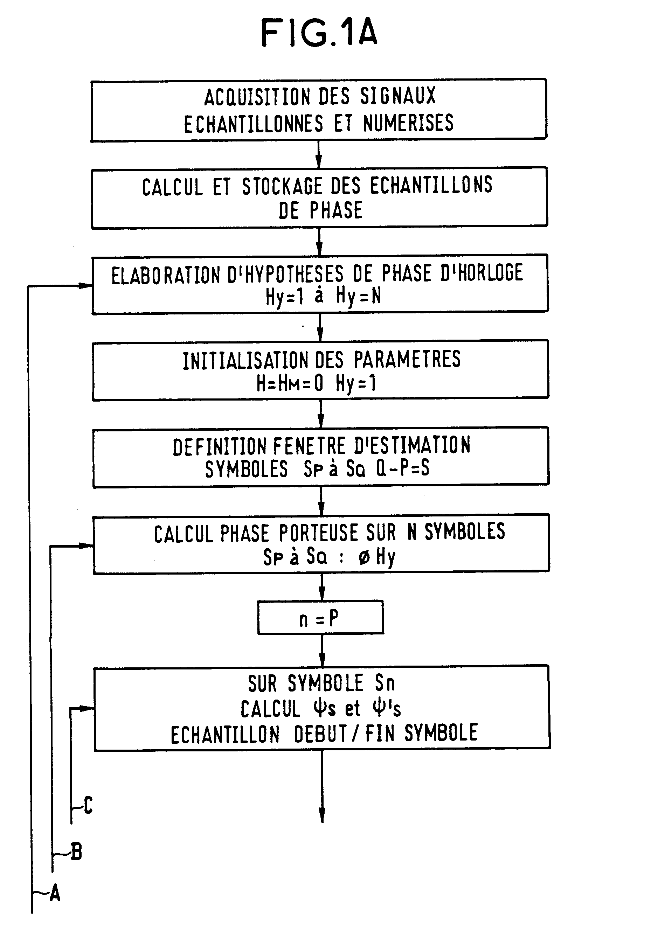

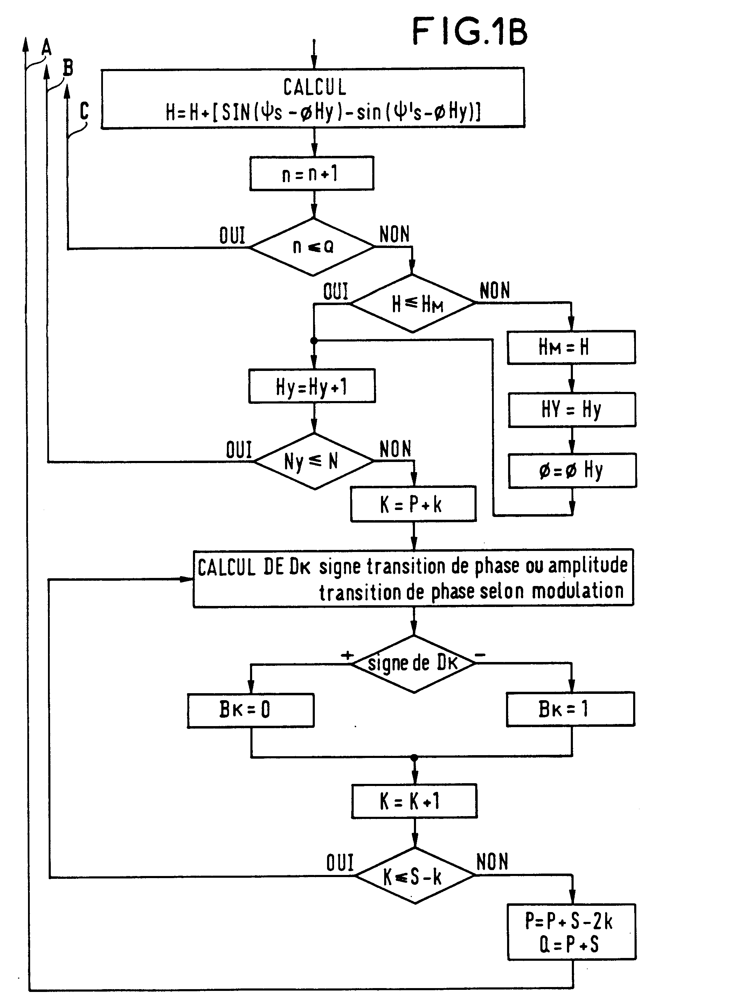

On peut se reporter à l'organigramme de la figure 1 pour mieux situer la suite logique de ces différentes phases et notamment en ce qui concerne le calcul :
- de la phase porteuse $\Phi_{Hy}$, chaque symbole allant de $S_p$ à $S_q$, n étant le numéro d'ordre du symbole avec $p \leq n \leq q$ ; pour l'hypothèse Hy considérée.
- du paramètre

$$H = \sum_{n=p}^{q} \left[ \sin ( \Psi_s - \Phi_{Hy}) - \sin ( \Psi'_s - \overline{\Phi}_{Hy}) \right]$$

$\Psi_s$ et $\Psi'_s$ étant respectivement la phase avant et après la transition.
- du maximum $H_M$ du paramètre H ce qui permet de déduire la phase porteuse $\phi$ relative au $\Phi_{Hy}$ de l'hypothèse retenue et la phase rythme correspondante.

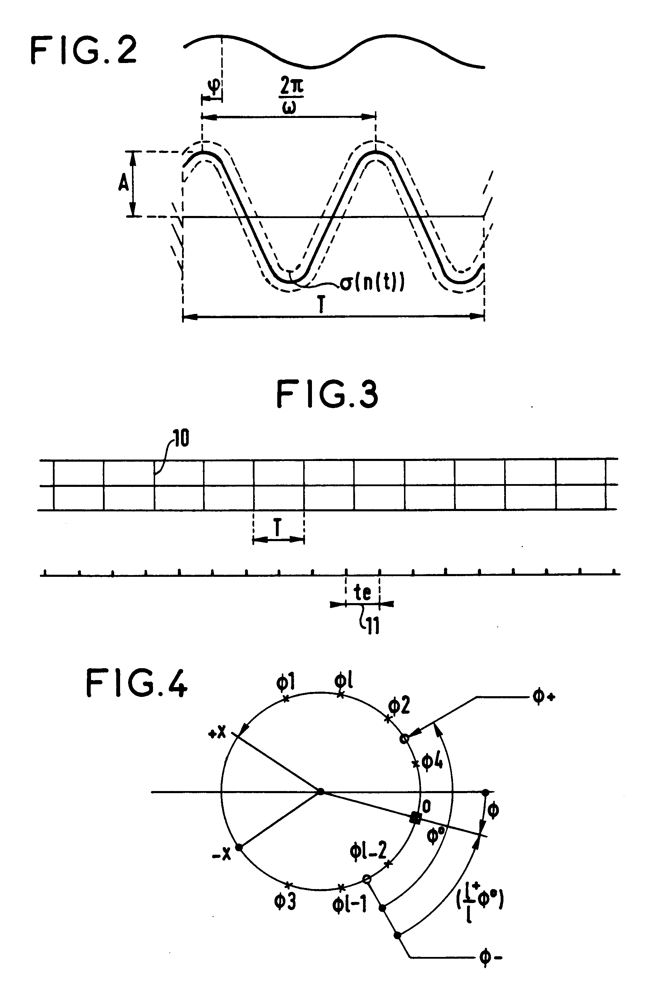

Le signal à démoduler a les caractéristiques de la figure 2, sur laquelle on a représenté durant une période de rythme T un signal sinusoïdal de phase fixe, le signal pouvant avoir une phase différente durant le symbole précédent et le symbole suivant.

On peut aussi le décrire par :

$$x(t) = A \sin ( \omega t + \phi ) + n(t)$$

A : amplitude crête

ω : pulsation de la porteuse

φ : phase durant le symbole Sn

On a également représenté en haut de cette figure 1a porteuse de référence.

La première phase du procédé de l'invention consiste en la transformation du signal en échantillons numérisés.

Une construction du signal analytique suivie de la phase développée comme décrit dans la demande de brevet déposée ce jour sous le titre "Procédé d'évaluation numérique de la fréquence et de la phase de signaux et dispositif de mise en oeuvre d'un tel procédé" permet alors d'obtenir des échantillons représentatifs de la phase du signal sous forme numérique sur lesquels sont basés tous les algorithmes.

La figure 3 représente le signal pour une succession de symboles et les emplacements des échantillons de phase qui le représentent ; avec des transitions de phase 10 en début et fin de symbole, et la position temporelle 11 des échantillons de phase du signal.

La fréquence d'échantillonnage est choisie de telle sorte que deux échantillons successifs soient "juste" décorrellés entre eux.

Tenant compte du fait que la fréquence d'échantillonnage et le rythme ne sont pas cohérents, le choix de la fréquence d'échantillonage doit tenir compte :

- du rythme symbole et de l'incertitude correspondante ;
- de l'incertitude sur la fréquence porteuse.

Elle doit donc permettre, tenant compte de ces éléments, de disposer du nombre d'échantillons par symbole permettant le calcul de la phase porteuse sur chaque symbole avec la précision requise pour les performances de la démodulation.

Le rythme étant connu, lors de la phase d'élaboration d'hypothèses de phase d'horloge il s'agit de placer les transitions de phase 10 à la bonne position temporelle. Etant donné une période de durée égale à celle d'un symbole et placé de manière quelconque relativement aux échantillons de phase (T et te glissent l'un par rapport à l'autre) on partage cet intervalle de temps en n parties égales et on considère successivement la probabilité de trouver les transitions de phase de signal dans chacune des partitions de T.

Tenant compte de ces hypothèses, la phase rythme choisie sera déterminée en fonction d'un critère défini et calculé selon les principes que l'on va décrire maintenant.

On effectue les opérations suivantes sur les échantillons de phases modulo ±x :

La représentation des angles de phase modulo ±x est déduite de la représentation des nombres modulo N, utilisée en numération (binaire, décimale, hexadécimale...).

Pour tout angle $\Phi$ compris entre $-\infty$ et $+\infty$ sa représentation module ±x est donnée par un angle $\phi$ compris entre -x et +x tel que si $\Phi$ est compris entre (2n-1) x et (2n+1) x, on a:

$$\frac{x}{\Phi - \phi} = \frac{1}{2n} \; ;$$

n étant entier,

et : $-x < \phi < +x$

De la même façon on désignera une opération $\gamma = (\alpha + \beta)$ mod ±x à partir de l'opération $\gamma' = \alpha + \beta$ et de la transformation modulo décrite ci-dessus qui revient à dire que :

- si $-x \leqslant \gamma' < +x$ on a $\gamma = \gamma'$
- si $\gamma' \geqslant +x$ on fait $\gamma' \leftarrow (\gamma' - 2x)$

et l'on renouvelle le test jusqu'à l'obtention de $-x \leqslant \gamma' < +x$

- si $\gamma' < -x$ on fait $\gamma' \leftarrow (\gamma' + 2x)$

et l'on renouvelle le test jusqu'à l'obtention de $-x \leqslant \gamma' < +x$

Dans le cas particulier où $x = \frac{\pi}{N}$ (N entier), on effectue un recouvrement de tous les secteurs de dimension 2x compris entre (2k - 1) x et (2K + 1) x (k entier) sur le secteur ±x

Si $x = \pi$, la classe d'équivalence est de dimension $2\pi$.

La notion de "barycentre cylindrique" est déduite de la notion classique de barycentre et adaptée à la

5

configuration cylindrique selon laquelle on peut représenter les angles temporellement. Cette notion de barycentre cylindrique modulo ±x repose sur le fait que le barycentre d'angles situés sur une plage d'amplitude inférieure à x se calcule par une pondération uniforme. Ainsi, pour calculer le barycentre de 1 phases $\Phi_1$, $\Phi_2$..... $\Phi_1$ définis sur l'intervalle $-x \le \Phi_i < + x$, on calcule séparément les centres de gravité des phases positives $\Phi^+$ et des phase négatives $\Phi^-$ sachant que, compte tenu de la règle des modulo si $\phi = (2k + 1) x$, il lui correspond, en particulier si $k = o$, $\Phi = -x$.

En conséquence, si les phases sont évolutives, on passe directement de $\Phi = + x$ à $\Phi = -x$.

On a aussi :

$$\Phi^+ = \left\{ \begin{array}{ll} \dfrac{1}{1^+} \displaystyle\sum_{\substack{t \\ \Phi_t > 0}} \Phi_t & \text{si } 1^+ > o \\[4ex] o & \text{si } 1^+ = o \end{array} \right.$$

$$\Phi^- = \left\{ \begin{array}{ll} \dfrac{1}{1^-} \displaystyle\sum_{\substack{t \\ \Phi_t < 0}} \Phi_t & \text{si } 1^- > o \\[4ex] o & \text{si } 1^- = o \end{array} \right.$$

Ramenant l'origine en $\Phi^-$ on obtient :

$$\Phi_0 = (\Phi^+ - \Phi^-) \bmod \pm x$$

et prenant le barycentre cylindrique modulo $\pm x$ de $\Phi^+$ et $\Phi^-$ avec leur pondération respective $1^+$ et $1^-$, pour revenir ensuite à l'origine initiale, on obtient ainsi le barycentre modulo $\pm x$ :

$$\Phi = \left(\frac{1}{1} \Phi_0 + \Phi^-\right) \bmod \pm x$$

On peut vérifier que lorsque $(\Phi^+ - \Phi^-) < x$, le procédé de l'invention revient à appliquer la moyenne à l'ensemble des phases sur l'intervalle $-x$, $+x$. Par contre, si $(\Phi^+ - \Phi^-) > x$, on doit travailler sur l'intervalle $-2x$, $o$ pour obtenir le résultat.

La construction du barycentre cylindrique telle qu'elle est décrite permet de restituer la valeur moyenne de la phase en tenant compte des incertitudes inhérente à l'évaluation de cette dernière (Evaluation de la phase sur des intervalles de dimension $2\pi$ ou sous multiple de ce dernier), ou d'effectuer des repliements de ces intervalles (suppression de la modulation) ou encore de prendre la bissectrice de plusieurs angles de phase.

Les échantillons représentatifs de l'amplitude du signal peuvent avantageusement être introduits pour pondérer chacune des phases correspondantes et ainsi tenir compte de l'incertitude liée au bruit.

La figure 4 illustre la construction du barycentre cylindrique ; en effet on a :

- Nombre de $\phi_i > 0$ : $1^+$ $(\phi_1, \phi_2, \phi_4....\phi_1)$
- Nombre de $\phi_i < 0$ : $1^-$ $(\phi_3....\phi_{1-2}, \phi_{1-1})$

$$1^+ + 1^- = 1$$

$$\phi^+ = \frac{1}{1^+} (\phi_1 + \phi_2 + \phi_4 + .... + \phi_1)$$

$$\phi^- = \frac{1}{1^-} (\phi_3 + .... + \phi_{1-2} + \phi_{1-1})$$

$$\phi_0' = \phi^+ - \phi^- > 0 \text{ puis } \phi_0 = \phi_0' \text{ mod } \pm x \text{ soit:}$$

$$\text{si } \phi_0' < x \qquad \phi_0 = \phi_0'$$

$$\text{si } \phi_0' > x \qquad \phi_0 = \phi_0' - 2 x$$

$$\phi' = \frac{1^+}{1} \phi_0 + \phi^-$$

$$\text{puis } \phi = \phi' \text{ mod } \pm x \text{ soit :}$$

$$\text{si } - x < \phi' < + x \qquad \phi = \phi'$$

$$\text{si } \qquad \phi' > x \qquad \phi = \phi' - 2 x$$

$$\phi' < - x \qquad \phi = \phi' + 2 x$$

La phase de l'horloge (rythme symbole) étant supposée définie par l'hypothèse considérée, on prend en compte, pour chacun des symboles les échantillons de phase qui sont inclus dans la période correspondante.

En utilisant la méthode du barycentre cylindrique sur la durée du symbole, on détermine la phase $\theta_s$ du signal pour le symbole considéré.

Le nombre d'échantillons pris en compte (rapport T/te) dépend des différentes incertitudes (porteuse et rythme). Dans le cas où porteuse et rythme sont parfaitement stables, un échantillon de phase par symbole peut être considéré comme suffisant.

En éliminant la modulation en appliquant une règle modulo adaptée au type de modulation, et en utilisant le barycentre cylindrique pour le plus grand nombre de symboles compatibles avec les instabilités de porteuse et de rythme, on obtient la phase porteuse avec une ambiguité modulo liée au type de modulation, ambiguité qu'il est aisé de lever par continuité sur les estimations successives.

On renouvelle toutes les opérations décrites ci-dessus pour chacune des hypothèses de phase.

Disposant, pour chaque hypothèse sur une fenêtre composée de S symboles :
- de la phase porteuse ;
- des valeurs caractéristiques des transitions de phase entre un symbole et le suivant
    $\Psi_s$ : phase avant la transition,
    $\Psi'_s$ : phase après la transition,
on calcule le paramètre H sur l'ensemble des S symboles selon :

$$H \triangleq \sum_s \left| \sin \left( \Psi_s - \underline{\Phi} \right) - \sin \left( \Psi'_s - \underline{\Phi} \right) \right|$$

et l'on choisit l'hypothèse de phase qui correspond au maximum de ce paramètre.

On en déduit à 1/n près la phase rythme et la phase porteuse correspondante.

On dispose alors de tous les éléments permettant la démodulation.

$\theta_s$ : phase relative au symbole considéré

$\Phi$ : phase de la porteuse

Pour chacun des symboles, l'information est portée par la valeur de l'angle.

$(\theta_s - \Phi)$

La décision est effectuée sur un critère dépendant de cette valeur et du type de modulation considéré.

Les deux exemples d'application (biphase L et BPSK différentiel) permettront de préciser la méthode de démodulation.

* On peut appliquer le procédé de l'invention à la modulation bi-phase L associée à des sauts de phase (± $\phi$ ).

Dans ce type de modulation, on fait correspondre à chaque symbole binaire, les phases de la porteuse indiquées dans le tableau I situé en fin de description.

On peut donc dire que la valeur (0 ou 1) du bit est représentée par le sens du saut de phase situé au milieu du symbole.

Dans le but de se protéger contre les incertitudes de fréquence horloge, on suréchantillonne le signal en utilisant 2n échantillons par symbole (n échantillons par 1/2 symbole).

On suppose, par ailleurs, que le rythme d'échantillonnage n'est pas un multiple du rythme symbole.

. Pour estimer la phase porteuse, à partir des échantillons de phase obtenus par le calcul sur le signal analytique :

$\Phi = Arc\ tg\ q/r$

comme décrit lors de l'explication de la construction de la phase développée dans la demande déposée ce jour citée précédemmment, on obtient 2n échantillons de phase par symbole du signal que l'on se propose de démoduler.

La fréquence de la porteuse est connue :

- soit à partir d'un préambule dont la longueur est suffisante pour obtenir l'estimation recherchée (transmission sur la base de "salves" Message SARSAT - Système AMRT)
- soit à partir d'une connaissance a priori de la porteuse à une approximation près.

Il est donc possible de retirer des échantillons de phase du signal, l'approximation connue de la rotation de phase modulo $\pm\pi$.

Pour chacune des hypothèses de phase d'horloge, on considère une succession de S symboles (durée ST) le nombre S choisi étant tel que S $\Delta$ T ($\Delta$ T : incertitude de rythme symbole) soit négligeable devant T et que la variance sur la phase estimée de la fréquence soit négligeable devant la période de la porteuse.

$$\langle (\hat{\Phi} - \Phi)^2 \rangle = \frac{1}{2}\ \frac{1}{S\rho}\ \text{avec}\ \rho = \frac{A^2}{2\sigma^2}$$

Tous les raisonnements et calculs qui suivent sont valables pour chacune des hypothèses de phase rythme. Chaque symbole comprend 2n échantillons de phase dénommés :

$\Phi_1\ \Phi_2\ \Phi_3... \Phi_{2n}$.

Afin de tenir compte de la position de la transition de phase au milieu du symbole :
- on calcule le barycentre cylindrique des échantillons

$\Phi_1\ \Phi_2... \Phi_n$ modulo $\pm\pi$
- on calcule le barycentre cylindrique des échantillons

$\Phi_{n+1}, \Phi_{n+2}... \Phi_{2n}$ modulo $\pm\pi$
- on prend le barycentre cylindrique modulo $\pm\ \pi/2$ des deux barycentres précédents.

Pour réduire l'écart-type de l'estimateur de la phase porteuse, on prend le barycentre cylindrique des résultats obtenus sur les S symboles et l'on aboutit ainsi à un écart de phase avec la porteuse estimé à $\pm$ $\pi/2$ dont la variance est donnée par :

$$\langle (\hat{\Phi} - \Phi)^2 \rangle = \frac{1}{2S\rho}$$

Pour lever l'ambiguité, on utilise le fait que la phase de la porteuse a évolué de moins de $\pi/2$ entre deux estimations successives.

Connaissant la phase $\Phi_t$ modulo $\pm\pi$ de l'estimation précédente et la phase $\Phi'_t$ qui vient d'être calculée modulo $\pm\ \pi/2$ on calcule :

$$\Phi'_t - \Phi_t \ et :$$

$$si - \Pi/2 < (\Phi'_t - \Phi_t) < + \Pi/2, \ \Phi'_t \ n'est \ pas \ modifié$$

$$si \qquad (\Phi'_t - \Phi_t) < - \Pi/2, \ \Phi'_t \ est \ remplacé \ par: (\Phi'_t + \Pi) \ modulo \ \pm\Pi$$

$$si \qquad (\Phi'_t - \Phi_t) > \Pi/2, \ \Phi'_t \ est \ remplacé \ par: (\Phi'_t - \Pi) \ modulo \ \pm\Pi$$

On dispose ainsi de la phase de référence de la porteuse, l'écart ($\Phi'_t - \Phi_t$) pouvant être utilisé pour corriger l'estimation connue de la fréquence.

. Pour estimer la phase rythme symbole:

on cherche à déterminer les échantillons de phase au voisinage desquels se trouvent les début et fin de chaque symbole.

On dispose pour cela de 4n hypothèses de phase : 2n en phase avec les échantillons, 2n entre les échantillons.

Pour chacune des hypothèses, on a calculé sur une séquence de S symboles, au milieu de cette séquence, la phase de la porteuse $\phi$ et sur chacun des symboles de la séquence, la barycentre cylindrique $\Psi_s$ modulo $\pm \pi$ des n premiers échantillons et le barycentre cylindrique $\Psi''_s$ modulo $\pm \pi$ des n derniers échantillons. Si les échantillons du centre risquent d'apparaître simultanément avec la transition de phase, on calcule $\Psi_s$ sur $\Phi_1$ à $\Phi_{n-r}$ et $\Psi'_s$ sur $\Phi_{n+r+1}$ à $\Phi_{2n}$, r étant représentatif de la durée de la transition de phase.

C'est l'amplitude du saut de phase par rapport à la porteuse qui sert de critère pour le choix de la bonne hypothèse. L'hypothèse retenue est donc celle qui donne la plus grande valeur à la quantité H donnée par :

$$H \overset{\Delta}{=} \sum_s \left| \sin (\Psi_s - \Phi) - \sin (\Psi'_s - \Phi) \right|$$

L'opération décrite ci-dessus est relative à l'acquisition du rythme. Le rythme ainsi acquis peut servir à démoduler K bits situés au centre de la plage d'estimation de S bits.

Pour les estimations suivantes, le nombre d'hypothèses peut être réduit aux seules hypothèses situées de part et d'autre du résultat de l'estimation précédente.

Enfin, durant les périodes de synchronisation du message pour lesquelles la suite binaire est connue, un test plus efficace peut être obtenu si l'on se positionne à moins d'un symbole.

. Pour réaliser la démodulation, on considère que la phase porteuse et la phase rythme symbole, estimées sur S symboles, servent à démoduler k (< S) symboles centrés au milieu de la plage.

La valeur du bit pour les k symboles considérés est alors donnée par le signe de l'expression.

$$\sin (\Psi_s - \Phi) - \sin (\Psi'_s - \Phi)$$

Cette expression peut aussi être directement utilisée si l'on superpose N messages contenant la même information en vue d'une amélioration du taux d'erreur (rapport C/N faible) en effectuant un décodage pondéré ou une superposition symbole à symbole.

* On peut également appliquer le procédé de l'invention à la modulation par saut de phase.

On décrit ci-dessous le cas d'application le plus simple : modulation BPSK à $\pm \pi/2$ selon le schéma de modulation du tableau II situé en fin de description, et l'on généralisera ensuite aux modulations de phase à M niveaux (2k-1) $\pi/M$ (k entier $\leq$ (M-1)).

Dans la description qui suit, on suppose que le rythme d'échantillonnage n'est pas un multiple du rythme symbole. Un échantillon de phase durant la partie stable de la phase d'horloge "juste" décorélé pour le bruit de l'échantillon qui le précède, suffit donc à définir la phase durant le symbole.

Les procédés permettant l'élaboration de cet échantillon pour les différentes hypothèses de rythme symbole considérées, sont basées sur des procédés connus de numérisation, de construction du signal analytique, de filtrage numérique, et de construction de la phase développée qui ont été décrits dans la demande de brevet déposée ce jour et citée précédemment. Le choix de l'échantillon de phase suppose,

9

bien évidemment, que les circuits en question soient adaptés, en particulier au sens du filtrage des signaux, pour obtenir le résultat recherché.

Tous les calculs qui suivent sont effectués pour chacune des hypothèses de phase symbole considérées de manière à parvenir, en effectuant un test d'hypothèses, à la définition de la phase symbole, puis à sa poursuite et à la démodulation du signal.

. Pour estimer la phase porteuse, disposant d'un échantillon de phase $\Psi_s$ par symbole, on retire la rotation de phase correspondant à la connaissance de la fréquence porteuse. On obtient ainsi une suite d'échantillons de phase $\Phi_t$ modulo $\pm \pi$ que l'on transforme en échantillons $\phi_t$ par une opération modulo $\pm \pi/2$ pour enlever la modulation comme indiqué ci-dessous :

$$
\begin{aligned}
&\text{si} \quad -\Pi/2 < \Phi_t < +\Pi/2 \qquad \phi_t = \Phi_t \\
&\text{si} \qquad\qquad \Phi_t < -\Pi/2 \qquad \phi_t = \Phi_t + \Pi \\
&\text{si} \qquad\qquad \Phi_t > \Pi/2 \qquad \phi_t = \Phi_t - \Pi
\end{aligned}
$$

On calcule ensuite le barycentre cylindrique modulo $\pm \pi/2$ sur le plus grand nombre de symboles S compatibles avec la stabilité de la fréquence porteuse et la connaissance de la phase symbole selon la méthode décrite précédemment. Pour ce faire, on calcule séparément les barycentres cylindriques des phases positives $\phi^+$ et négatives $\phi^-$ en écrivant :

$$
\phi^+ = \begin{cases} \dfrac{1}{1^+} \displaystyle\sum_{\substack{t \\ \phi_t > 0}} \phi_t & \text{si} \quad 1^+ > 0 \\[2em] 0 & \text{si} \quad 1^+ = 0 \end{cases}
$$

$$
\phi^- = \begin{cases} \dfrac{1}{1^-} \displaystyle\sum_{\substack{t \\ \phi_t < 0}} \phi_t & \text{si} \quad 1^- > 0 \\[2em] 0 & \text{si} \quad 1^- = 0 \end{cases}
$$

$$
\text{puis} \quad \phi_0 = (\phi^+ - \phi^-) \bmod \pm \Pi/2
$$

$$
\text{et enfin} \quad \Psi = \left(\frac{1^+}{1} \phi_0 + \phi^-\right) \bmod \pm \Pi/2
$$

On aboutit ainsi à une valeur de phase à laquelle on ajoute $\pi/2 \bmod \pm \pi/2$ pour obtenior la phase estimée $\Psi'_t$ de la porteuse calculée sur les S symboles considérés et définie dans l'intervalle $\pm \pi/2$.

Du fait que les décalage de phase entre deux estimations successives est toujours inférieur à $\pi/2$, on lève l'ambiguité en exploitant la continuité de l'évolution de phase entre l'estimation précédente $\alpha_t$ - (intervalle $\pm \pi$) et $\phi'_t$ (intervalle $\pm \pi/2$) pour trouver $\alpha'_t$ en appliquant :

$$\alpha'_t = \Psi'_t \qquad\qquad si - \Pi/2 < (\Psi'_t - \alpha_t) < \Pi/2$$
$$(\alpha'_t = \Psi'_t + \Pi) \bmod \pm\Pi \qquad si \qquad (\Psi'_t - \alpha_t) < -\Pi/2$$
$$(\alpha'_t = \Psi'_t - \Pi) \bmod \pm\Pi \qquad si \qquad (\Psi'_t - \alpha_t) > \Pi/2$$

On dispose ainsi de la phase porteuse $\alpha$ pour chacune des hypothèses de rythme symbole considérée, l'écart quadratique de l'estimation étant

$$\frac{1}{2}\frac{1}{S\rho}$$

avec

S : nombre de symboles considérés

$\rho$ : rapport $S/_B$ incluant les bruits de phase et les instabilités de la porteuse.

. Pour estimer la phase rythme, pour tester les hypothèses de phase symbole, on recherche des couples d'échantillons en bande de base encadrant les débuts (ou fin) de symbole : soit $\beta_s$ et $\beta'_s$ ces valeurs pour le $i^e$ symbole. L'hypothèse à retenir est celle qui donne a H la plus grande valeur calculée selon la formule.

$$H \stackrel{\Delta}{=} \sum_s \left| \sin(\beta_s - \alpha) - \sin(\beta'_s - \alpha) \right|$$

Ce test étant effectué, on retient

a) la phase horloge reliée au maximum de H

b) la phase porteuse correspondante.

La poursuite de la phase horloge est ensuite effectuée sur les trois hypothèses encadrant la phase précédente.

. La démodulation est effectuée directement sur la valeur de la phase résultant de l'opération :

$$\Psi_s - \Phi$$

selon le tableau III situé en fin de description, avec :

$\Psi_s$ : phase du signal calculée sur chacun des symboles modulo $\pm \pi$ ;

$\Phi$ : phase de la porteuse résultant de l'estimation décrite précédemment ;

$\Psi_s$ et $\Phi$ résultant de l'hypothèse de phase rythme retenue.

* En généralisant on peut appliquer le procédé de l'invention à des modulations PSK à M niveaux (M > 2) et FSK.

Toutes les opérations décrites précédemment restent valables pour une modulation PSK à M niveaux à condition :

- d'effectuer le calcul de la phase porteuse en l'initialisant par une opération modulo $\pm \pi/_M$ (au lieu de $\pm \pi/_2$) puis en calculant le barycentre cyclindrique modulo $\pm \pi/_M$ (au lieu de $\pm \pi/_2$)

- d'effectuer la démodulation en utilisant la table des phases adaptée au type de modulation traitée.

Dans le cas d'une modulation FSK, il y a lieu de considérer plusieurs fréquences. L'application du procédé revient donc à effectuer un test d'hypothèses, dans lesquelles plusieurs fréquences sont attribuées à chacun des symboles considérés.

Un dispositif de mise en oeuvre du procédé de l'invention comprend un organe de traitement numérique 20, recevant en entrée le signal à analyser SA après traversée d'un numériseur 21 auquel est relié un pilote stable 22.

Cet organe de traitement 20 comprend :

- un circuit 23 de mémoire commune ;

- un circuit 24 d'élaboration des échantillons de phase ;

- un circuit 25 d'élaboration des hypothèses de phase rythme ;

- un circuit 26 de calcul de la phase porteuse (par exemple 5 symboles) ;

- un circuit 27 de choix de l'hypothèse phase rythme ;

- un circuit 28 de calcul de la phase du signal (par exemple un symbole) ;

- un circuit 29 de démodulation ;

- un circuit 30 de gestion d'interface avec le démodulateur ;

- un circuit 31 interface des signaux démodulés ;

tous ces circuits étant reliés à un bus d'interconnection 32 par des liaisons bidirectionnelles, les deux derniers circuits étant reliés entre eux par une liaison bidirectionnelle ;
- un circuit 33 d'acquisition des échantillons numérisés, en entrée, relié au circuit 23 de mémoire commune par une liaison mono-directionnelle.

Le circuit 31 interface des signaux démodulés a deux sorties :
- une sortie signaux démodulés SS1,
- une sortie qualité signaux SS2,
qui forment les sorties dudit organe de traitement 20.

Un tel dispositif est utilisable quel que soit le type de démodulation choisie.

On trouve, dans cette architecture, tous les circuits nécessaires à l'élaboration du procédé de l'invention, certains d'entre eux étant adaptés à un type de modulation particulier.

Dans le cas où la fréquence porteuse est connue avec une incertitude nécessitant l'acquisition et la poursuite de la valeur de la fréquence de la porteuse afin d'obtenir les performances de démodulation, on se basera, pour l'évaluation de fréquence, sur le procédé décrit dans la demande de brevet déposée ce jour, citée précédemment.

L'architecture décrite suppose :
- une connaissance à priori de la fréquence porteuse compatible avec le nombre S de symboles pris en compte pour l'estimation de la phase porteuse.
- une connaissance à priori du rythme symbole avec une incertitude inférieure au 1/10 du décalage entre deux hypothèses sur une durée égale à S symboles.

Cette architecture permet :
- l'acquisition et le stockage en mémoire du signal à démoduler sous forme d'échantillons numériques bruts issus d'un numériseur délivrant au rythme d'échantillonnage, l'amplitude du signal à démoduler ;
- la conversion des échantillons d'amplitude en échantillons de phase comprenant le traitement par filtrage des échantillons, la conversion du signal en ses deux composantes (réelle et quadrature) pour obtenir la phase échantillonnée ;
- l'élaboration d'hypothèses de phases rythme permettant un découpage temporel du signal en tranches de durée T (1/T = Rythme) adaptées aux différentes étapes de démodulation (acquisition et poursuite). Dans le cas de la poursuite, le nombre d'hypothèses pris en compte sera réduit au minimum nécessaire.
- le calcul pour chaque hypothèse de phase rythme, de la phase porteuse sur un symbole, puis en éliminant la modulation l'estimation de la phase porteuse sur S symboles ;
- la comparaison entre phase symbole et phase porteuse ce qui permet l'extraction du signal démodulé (signification symbole supportée par la phase signal) ainsi qu'une appréciation de la qualité du signal modulé durant chaque symbole et de la qualité de la démodulation.

L'architecture matérielle utilisée pour construire un démodulateur appliquant le procédé de l'invention répond aux principes de :
- Partage des tâches entre différents organes de calcul travaillant indépendamment les uns des autres ;
- Accès indépendant en lecture de l'un quelconque des organes de calcul, à tous les résultats des tâches effectuées par les autres organes. L'utilisation de mémoires adressables accessibles par bus commun ou "multiport" ou organisées en réseaux maillés interconnectant les différents organes est incluse;
- Inscription exclusive dans chacune des zones délimitées de la (ou des) mémoires par un organe de calcul préalablement désigné.

La description s'appuie principalement sur deux types de modulation (bi-phase L. associé à une modulation de phase à $\pm \phi$, BPSK différentiel).

Les différentes tâches de calcul nécessaires à la démodulation peuvent être implantées sur des organes de calcul pilotés par logiciel, chaque organe étant indépendant des autres organes et pouvant s'adresser à des mémoires pour y lire l'un quelconque des résultats des autres organes aussi bien que les échantillons de signaux inscrits à l'origine ainsi que ses propres résultats de calcul ou pour y inscrire dans une zone qui est affectée à lui seul ses propres résultats de calcul, ces mémoires étant soit communes soit constituées de réseaux maillés.

TABLEAU I

| | 1er 1/2 Symbole | 2ème 1/2 Symbole |
|---|---|---|
| 0 | $- \phi$ | $+ \phi$ |
| 1 | $+ \phi$ | $- \phi$ |

TABLEAU II

| | Phase relativement à la porteuse |
|---|---|
| 0 | $+ \Pi/2$ |
| 1 | $- \Pi/2$ |

TABLEAU III

| Valeur de $(\Psi_s - \Phi)$ modulo $\pm \Pi$ | Valeur du bit |
|---|---|
| $> 0$ | 0 |
| $< 0$ | 1 |

**Revendications**

1. Procédé numérique de démodulation de signaux modulés numériquement par variation de phase comprenant une phase d'acquisition des signaux échantillonnés et numérisés suivie d'une phase de calcul des échantillons de phase; caractérisé en ce qu'il comprend en outre successivement :
   - une phase de stockage des échantillons de phase,
   - une phase d'élaboration d'hypothèses de phase d'horloge,
   - une phase de calcul de la phase porteuse et de la phase rythme sur n symboles,

13

- une phase de démodulation proprement dite par comparaison entre la phase du signal durant le symbole considéré et la phase de la porteuse;

et en ce que dans cette phase de calcul de la phase porteuse et de la phase rythme sur n symbole, en partant des hypothèses de phases rythme symbole par des opérations modulo ±X, ces opérations pour tout angle $\Phi$ compris entre $-\infty$ et $+\infty$ étant données par un angle $\phi$ compris entre $- X$ et $+ X$ tel que si $\Phi$ est compris entre $(2n - 1) X$ et $(2n + 1) X$ on a $X/(\Phi-\phi) = 1/2n$ ; n étant entier, et en utilisant le barycentre cylindrique, qui est tel que pour $\ell$ phases $\Phi1$, $\Phi2$,...$\Phi l$ définies sur l'intervalle $- X \leq \Phi i < + X$ après un calcul séparé des centres de gravités des phases positives $\Phi^+$ et des phases négatives $\Phi^-$, en ramenant l'origine en $\Phi^-$ et en utilisant les pondérations respectives $\ell^+$ et $\ell^-$ on a ledit barycentre $\Phi = [(\ell^+/\ell)\Phi_0 + \Phi^-]$ modulo $\pm X$ avec $\Phi_0 = (\Phi^+ - \Phi^-)$ modulo $\pm X$, on supprime la modulation afin d'évaluer la phase porteuse durant chacun des symboles, pour effectuer une estimation de la phase porteuse sur S symboles, S étant choisi en fonction de l'incertitude sur le rythme et sur la porteuse; la connaissance de la phase rythme et partant de la phase porteuse étant obtenue en maximisant un paramètre H qui est fonction de la phase ainsi obtenue et des valeurs caractéristiques des transitions de phase entre symboles.

2. Procédé selon la revendication 1, caractérisé en ce que la démodulation est basée sur l'acquisition des signaux échantillonnés et numérisés, en ce qu'on construit le signal analytique associé et la phase développée dudit signal à partir des échantillons ainsi stockés, et en ce qu'on dispose ainsi d'une réprésentation du signal reçu par des échantillons de phase auxquels on peut associer la valeur de l'amplitude.

3. Procédé selon l'une quelconque des revendications précédentes, caractérisé en ce que les échantillons de départ sont stockés en mémoire d'où ils sont extraits autant de fois que nécessaire aux fins de calculs effectués selon un algorithme unique appliqué à plusieurs hypothèses de phase rythme, d'où découle, selon un critère adapté au type de modulation de phase, la phase porteuse; ce qui permet d'extraire simplement les informations démodulées et d'apprécier la qualité du signal modulé et de l'opération de démodulation.

4. Dispositif de mise en oeuvre du procédé de l'invention selon l'une quelconque des revendications précédentes, comprenant un organe de traitement numérique (20), recevant en entrée le signal à analyser (SA) après traversée d'un numériseur (21) caractérisé en ce qu'un pilote stable (22) est relié au numériseur (21), et en ce que l'organe de traitement comprend:
   - un circuit (23) de mémoire commune;
   - un circuit (24) d'élaboration des échantillons de phase;
   - un circuit (25) d'élaboration des hypothèses de phase rythme;
   - un circuit (26) de calcul de la phase porteuse;
   - un circuit (27) de choix de l'hypothèse phase rythme;
   - un circuit (28) de calcul de la phase du signal;
   - un circuit (29) de démodulation;
   - un circuit (30) de gestion d'interface avec le démodulateur;
   - un circuit (31) interface des signaux démodulés;
   tous ces circuits étant reliés à un bus d'interconnection (32) par des liaisons bidirectionnelles, les deux derniers circuits étant reliés entre eux par une liaison bidirectionnelle;
   - un circuit (33) d'acquisition des échantillons numérisés, en entrée, relié au circuit (23) de mémoire commune par une liaison mono-directionelle;
   le circuit interface des signaux démodulés ayant deux sorties :
   . une sortie signaux démodulés (SS1),
   . une sortie qualité signaux (SS2),
   qui forment les sorties dudit organe de traitement (20).

5. Procédé selon l'une quelconque des revendications 1 à 3, caractérisé en ce que le signal modulé est de type "PSK" à un ou plusieurs niveaux, modulé de manière cohérente ou différentielle, à un signal dérivé tel que offset QPSK ou tout procédé de modulation permettant l'obtention d'un signal à amplitude constante (MSK - modulation cohérente de phase).

6. Procédé selon l'une quelconque des revendications 1 à 3, caractérisé en ce que le signal modulé est de type "PSK" avec des sauts d'amplitude; l'amplitude étant traitée par des procédés connus.

7. Procédé selon l'une des revendications 1 à 3, caractérisé en ce que le signal modulé est de type "FSK", le test d'hypothèses effectué tenant compte de plusieurs fréquences de modulation.

## Claims

1. A digital method of demodulating digitally modulated signals by phase variation comprising a stage for acquiring the sampled and digitized signals followed by a stage for calculating the phase samples, characterized in that it further includes in succession:
   - a stage for storing phase samples,
   - a stage for elaborating clock phase hypotheses,
   - a stage for calculating the carrier phase and the rate phase over n symbols,
   - phase for demodulation properly speaking by comparing the phase of the signal during the symbol under consideration with the phase of the carrier,
   and in that said stage for calculating the carrier phase and the rate phase over n symbols, starting from symbol rate phase hypotheses using module ±X operations, these operations, comprised between -∞ and +∞ for any angle $\Phi$, being given by an angle $\phi$ comprised between -X and +X such that, if $\Phi$ is comprised between $(2n-1)X$ and $(2n+1)X$, one obtains $X/(\Phi-\phi) = 1/2n$, with n being an integer, and using the cylindrical center of gravity, which is determined such that, for l phases $\Phi 1, \Phi 2, ... \Phi l$ defined along the interval $-X \leq \Phi i < +X$, after having calculated separately the centers of gravity of the positive phases $\Phi^+$ and of the negative phases $\Phi^-$, and bringing the point of origin back to $\Phi^-$ as well as using the respective weightings $l^+$ and $l^-$, one obtains said center of gravity $\Phi = ((l^+/l) \Phi_0 + \Phi^-)$ modulo ±X, with $\Phi_0 = (\Phi^+ - \Phi^-)$ modulo ±X, one eliminates the modulation in order to evaluate the carrier phase during each one of the symbols so as to estimate the carrier phase over S symbols, with S being selected as a function of the uncertainty on the symbol rate and on the carrier, the knowledge of the symbol rate phase being obtained starting from the carrier phase by maximizing a parameter H which is a function of the phase obtained in this way and of values characteristic of inter-symbol phase transitions.

2. A method according to claim 1, characterized in that the demodulation is based on acquiring sampled and digitized signals, in that the associated analytic signal and the developed phase of said signal are constructed from the samples stored in this way, and in that a representation of the received signal is provided thereby in the form of phase samples which can be associated with amplitude value.

3. A method according to any preceding claim, characterized in that the starting samples are stored in memory from which they are extracted as often as necessary for the purposes of the calculations performed using a single algorithm which is applied to a plurality of symbol rate phase hypotheses, from which results the carrier phase using a criterion adapted to the type of modulation, thereby making it possible to extract the demodulated information simply and also to appreciate the quality of the modulated signal and of the demodulation operation.

4. A device for implementing the method of the invention according to any preceding claim, comprising a digital processor member (20) receiving the signal to be analyzed (SA) at its input after it has passed through a digitizer (21), characterized in that a stable pilot (22) is connected to the digitizer (21), and in that the processor member includes:
   - a common memory circuit (23),
   - a circuit (24) for generating phase samples,
   - a circuit (25) for generating symbol rate phase hypotheses,
   - a circuit (26) for calculating the carrier phase,
   - a circuit (27) for selecting the symbol rate phase hypothesis,
   - a circuit (28) for calculating the signal phase,
   - a demodulator circuit (29),
   - a circuit (30) for controlling the interface with the demodulator,
   - an interface circuit (31) for the demodulated signal,
     the above circuits being connected to an interconnection bus (32) by respective two-way links, with the last two circuits being connected to each other by a two-way link; and
   - a circuit (33) for acquiring digitized samples at the input, said circuit being connected to the common memory circuit (23) by a one-way link,
   said demodulated signal interface having two outputs,

- an output for demodulated signals (SS1), and
- a signal quality output (SS2), said outputs constituting the outputs from said processor member (20).

5. A method according to any one of claims 1 to 3, characterized in that the modulated signal is a PSK modulated signal having one or more levels and modulated in coherent or differential manner to a derived signal such as obtained by the offset QPSK method or by any modulation method enabling a constant amplitude signal to be obtained (coherent phase modulation).

6. A method according to any one of claims 1 to 3, characterized in that the modulated signal is a PSK modulated signal having shifts in amplitude, with the amplitude being processed by known methods.

7. A method according to any one of claims 1 to 3, characterized in that the modulated signal is a FSK modulated signal, with hypotheses being tested by taking account of a plurality of modulation frequencies.

**Patentansprüche**

1. Digitales Verfahren zum Demodulieren von digital mittels Phasenveränderung modulierten Signalen, mit einem Verfahrensschritt zur Akquisition der getasteten und digitalisierten Signale gefolgt von einem Verfahrensschritt zur Berechnung der Phasentastproben, dadurch gekennzeichnet, daß das Verfahren weiter nacheinander umfaßt:
   - einen Verfahrensschritt zum Speichern der Phasentastproben,
   - einen Verfahrensschritt, in dem Hypothesen der Taktphase erarbeitet werden,
   - einen Verfahrensschritt zur Berechnung der Trägerphase und der Taktphase über n Symbole,
   - einen Verfahrensschritt zur eigentlichen Demodulation durch Vergleichen der Signalphase während des betrachteten Symbols und der Trägerphase,
   
   und daß in dem Verfahrensschritt der Berechnung der Trägerphase und der Taktphase über n Symbole, ausgehend von Symboltaktphasenhypothesen auf Basis von Modulo ±X-Operationen, die für jeden Winkel $\Phi$ zwischen $-\infty$ und $+\infty$ durch einen Winkel $\phi$ zwischen -X und +X gegeben sind, derart, daß, wenn $\Phi$ zwischen (2n-1)X und (2n+1)X liegt, man $X/(\Phi-\phi) = 1/2n$ erhält, wobei n eine ganze Zahl ist, und durch Benutzen des zylindrischen Schwerpunkts, der so bestimmt ist, daß man für I Phasen $\Phi 1$, $\Phi 2$, ... $\Phi l$, die über das Intervall $-X \leq \Phi i < +X$ definiert sind, nach einer getrennten Berechnung der Schwerezentren der positiven Phasen $\Phi^+$ und der negativen Phasen $\Phi^-$, durch Rückführen des Ursprungspunkts nach $\Phi^-$ und Benutzen der jeweiligen Gewichtungen $I^+$ und $I^-$, man den Schwerpunkt $\Phi = I^+/I \ (\Phi_0 + \Phi^-)$ Modulo ±X mit $\Phi_0 = (\Phi^+ - \Phi^-)$ Modulo ±X erhält, man die Modulation beseitigt, um während jedes der Symbole die Trägerphase zu ermitteln, um eine Abschätzung der Trägerphase über S Symbole durchzuführen, wobei S in Abhängigkeit von der Unsicherheit über den Takt und über den Träger gewählt wird, und wobei die Kenntnis des Phasentakts, ausgehend von der Trägerphase, durch Maximieren eines Parameters H gewonnen wird, der von der so erhaltenen Phase und den Kennwerten der Phasenübergänge zwischen den Symbolen abhängt.

2. Verfahren nach Anspruch 1, dadurch gekennzeichnet, daß die Demodulation auf der Akquisition der getasteten und digitalisierten Signale beruht, daß man das zugehörige analytische Signal und die entwickelte Phase des Signals aus den so gespeicherten Tastproben konstruiert und daß man damit über eine Darstellung des empfangenen Signals in Form von Phasentastproben verfügt, denen man den Amplitudenwert zuordnen kann.

3. Verfahren nach einem beliebigen vorhergehenden Ansprüche, dadurch gekennzeichnet, daß die Anfangstastproben in einem Speicher abgelegt sind, aus dem sie so oft wie nötig zum Zweck der gemäß einem einzigen, auf mehrere Phasentakthypothesen angewandten Algorithmus durchzuführenden Berechnungen entnommen werden, woraus sich gemäß einem an den Phasenmodulationstyp angepaßten Kriterium die Trägerphase ergibt, was es ermöglicht, die demodulierten Informationen einfach abzugreifen und die Qualität des modulierten Signals und der Demodulationsoperation zu bewerten.

4. Einrichtung zur Durchführung des erfindungsgemäßen Verfahrens nach einem beliebigen der vorhergehenden Ansprüche, mit einem Digitalverarbeitungsgerät (20), das am Eingang das zu analysierende Signal (SA) nach Durchlauf durch ein Digitalisierglied (21) empfängt, dadurch gekennzeichnet, daß eine stabile Pilotsteuerung (22) an das Digitalisierglied (21) angeschlossen ist, und daß das Verarbeitungsgerät aufweist:

- eine gemeinsame Speicherschaltung (23),
- eine Schaltung (24) zur Realisierung von Phasentastproben,
- eine Schaltung (25) zur Erarbeitung von Taktphasenhypothesen,
- eine Schaltung (26) zur Berechnung der Trägerphase,
- eine Schaltung (27) zum Auswählen der Taktphasenhypothese,
- eine Schaltung (28) zur Berechnung der Phase des Signals,
- eine Demodulationsschaltung (29),
- eine Schnittstellensteuerungsschaltung (30) für die Schnittstelle zum Demodulator,
- eine Schnittstellenschaltung (31) für die demodulierten Signale, wobei alle diese Schaltungen über Zweirichtungsverbindungen an einen gemeinsamen Bus (32) angeschlossen sind und die beiden letztgenannten Schaltungen durch eine Zweirichtungsverbindung miteinander verbunden sind, und
- eine Schaltung (33) zur Akquisition der digitalisierten Tastproben am Eingang, die an die gemeinsame Speicherschaltung (23) über eine unidirektionale Verbindung angeschlossen ist,

wobei die Schnittstellenschaltung für die demodulierten Signale zwei Ausgänge besitzt, nämlich

- einen Ausgang (SS1) für die demodulierten Signale und
- einen Signalqualitätsausgang (SS2),

die die Ausgänge des Verarbeitungsgeräts (20) bilden.

5. Verfahren nach einem der Ansprüche 1 bis 3, dadurch gekennzeichnet, daß das modulierte Signal ein Signal vom Typ "PSK" mit einem oder mehreren Pegeln ist und kohärent oder differenziell auf ein abgeleitetes Signal wie etwa ein nach dem Offset-QPSK-Verfahren oder jedem Modulationsverfahren abgeleiteten Signal moduliert wird, das die Gewinnung eines Signals mit konstanter Amplitude ermöglicht (MSK-kohärente Phasenmodulation).

6. Verfahren nach einem beliebigen der Ansprüche 1 bis 3, dadurch gekennzeichnet, daß das modulierte Signal ein Signal vom Typ "PSK" mit Amplitudensprüngen ist, wobei die Amplitude durch bekannte Verfahren bearbeitet ist.

7. Verfahren nach einem beliebigen der Ansprüche 1 bis 3, dadurch gekennzeichnet, daß das modulierte Signal ein Signal vom Typ "FSK" ist, wobei die durchgeführten Hypothesentests mehrere Modulationsfrequenzen berücksichtigen.

# FIG.1A

ACQUISITION DES SIGNAUX
ECHANTILLONNES ET NUMERISES

CALCUL ET STOCKAGE DES ECHANTILLONS
DE PHASE

ELABORATION D'HYPOTHESES DE PHASE D'HORLOGE
Hy=1 à Hy=N

INITIALISATION DES PARAMETRES
H=Hм=0  Hy=1

DEFINITION FENETRE D'ESTIMATION
SYMBOLES  Sᴘ à Sα  Q-P=S

CALCUL PHASE PORTEUSE SUR N SYMBOLES
Sᴘ à Sα  :  ∅ Hy

n = P

SUR SYMBOLE Sn
CALCUL  Ψs et  Ψ's
ECHANTILLON  DEBUT / FIN SYMBOLE

C

B

A

# FIG.1B

CALCUL
$H = H + [SIN(\Psi_s - \emptyset H_y) - \sin(\Psi'_s - \emptyset H_y)]$

$n = n + 1$

$n \leqslant Q$  OUI / NON

$H \leqslant H_M$  OUI / NON

$H_M = H$

$H_y = H_y + 1$

$HY = H_y$

$N_y \leqslant N$  OUI / NON

$\emptyset = \emptyset H_y$

$K = P + k$

CALCUL DE $D_K$ signe transition de phase ou amplitude
transition de phase selon modulation

signe de $D_K$  + / −

$B_K = 0$

$B_K = 1$

$K = K + 1$

$K \leqslant S - k$  OUI / NON

$P = P + S - 2k$
$Q = P + S$

A

B

C

# FIG.2

# FIG.3

# FIG.4

# FIG.5

EP 0 291 979 B1